Europäisches Patentamt

(19) European Patent Office

Office européen des brevets

(11) Numéro de publication: **0 256 912**
**A1**

(12) **DEMANDE DE BREVET EUROPEEN**

(21) Numéro de dépôt: **87401723.9**

(22) Date de dépôt: **23.07.87**

(51) Int. Cl.⁴: **A 23 K 1/04**
**A 23 K 1/18**

(30) Priorité: **23.07.86 FR 8610702**

(43) Date de publication de la demande:
**24.02.88 Bulletin 88/08**

(84) Etats contractants désignés:
**AT BE CH DE ES FR GB GR IT LI LU NL SE**

(71) Demandeur: **PROLAIT**
**14 rue d'Inkermann B.P. 37**
**F-79001 Niort Cédex (FR)**

(72) Inventeur: **Helie, Jean-Paul**
**"Lens", St-Symphorien**
**F-79270 Frontenay Rouen (FR)**

**Helie, Francois**
**Epannes**
**F-79270 Frontenay Rouen (FR)**

**Paquereau, Christian**
**B.P. 37**
**F-79001 Niort Cedex (FR)**

(74) Mandataire: **Gutmann, Ernest et al**
**S.C. Ernest Gutmann - Yves Plasseraud 67, boulevard Haussmann**
**F-75008 Paris (FR)**

(54) **Principe nutritif à base de constituants obtenus à partir de globules rouges pour l'alimentation du jeune bétail non sevré, notamment des veaux.**

(57) L'invention concerne un principe nutritif de base pour l'alimentation animale, notamment du jeune bétail non sevré, consistant essentiellement en une composition de protéines issues de globules rouges de sang d'origine animale, cette composition étant essentiellement dépourvue de protéines plasmatiques étant solubilisable et ayant une teneur en acide, notamment en acide lactique, conférant aux solutions, susceptibles d'être obtenues, un pH inférieur à 5,00.

L'invention concerne également des compositions alimentaires animales à base du principe nutritif précédent et possédant des propriétés organoleptiques et nutritives équivalentes, voire supérieures à celles des aliments d'allaitement traditionnels à base de lait écrêmé.

EP 0 256 912 A1

## Description

### PRINCIPE NUTRITIF A BASE DE CONSTITUANTS OBTENUS A PARTIR DE GLOBULES ROUGES POUR L'ALIMENTATION DU JEUNE BETAIL NON SEVRE, NOTAMMENT DES VEAUX

L'invention concerne des compositions à base de constituants obtenus à partir de globules rouges du sang d'origine animale, pour l'alimentation du jeune bétail, notamment des veaux, et en particulier du jeune bétail non sevré.

A l'heure actuelle, l'alimentation des veaux, dont on sait qu'elle doit être la plus équilibrée possible, afin d'obtenir de bons rendements de production de viande, est essentiellement assurée par des aliments à base de lait écrêmé. Ce dernier est, dans sa plus grande partie, composé de caséine, de lactosérum, de matières grasses et de matières minérales. Toutefois, le lait écrêmé (sous-produit du beurre) possède l'inconvénient d'être d'un prix de revient de plus en plus élevé.

Un des buts de la présente invention est précisément de mettre à la disposition des éleveurs de bétail des compositions alimentaires dont les prix de revient soient plus compétitifs que ceux des aliments d'allaitement traditionnels, et dont les propriétés nutritives soient au moins équivalentes à celles de ces derniers.

L'intérêt de la découverte tient au fait que l'on peut conférer au sang des qualités organoleptiques et nutritionnelles adaptées au goût des animaux en phase d'alimentation monogastrique.

L'idée de l'utilisation du sang d'origine animale comme substitut possible au lait écrêmé traditionnellement utilisé pour l'allaitement du jeune bétail, a pour origine la détection, faite par les auteurs de ce brevet, d'une certaine analogie entre l'aminogramme (composition en acides aminés) de la caséine du lait et celui des globules rouges du sang (encore appelés cruor), sauf en ce qui concerne la méthionine.

Toutefois, les aliments à base de sang entier, fermenté ou non, sont d'une manière générale très mal acceptés par le jeune bétail, et en particulier par le jeune bétail non sevré.

Or, il a été constaté par les inventeurs que la fermentation des globules rouges préalablement séparés du plasma permet d'obtenir une composition, non seulement parfaitement digeste pour le jeune bétail, mais suscitant encore son appétence.

La composition sus mentionnée est donc essentiellement dépourvue des éléments plasmatiques en général, et plus particulièrement des leucocytes, de l'albumine, du fibrinogène soluble qui se transforme par l'action de la thrombine en fibrine insoluble lors du processus de coagulation, et de leurs éventuels produits de dégradation. La teneur en matières minérales d'une telle composition est inférieure à 10 %, notamment de l'ordre de 5 %, alors que cette même teneur pour le plasma est de l'ordre de 20 %.

Le sang d'origine animale, notamment de bovins, d'ovins, ou de porcins, nécessaire à la préparation des compositions selon l'invention, est additionné d'un anticoagulant tel que l'héparine, les citrates ou les polyphosphates. Les globules rouges sont ensuite séparés des éléments plasmatiques, par toute méthode appropriée, notamment par centrifugation, et sont recueillis essentiellement dépourvus desdits éléments plasmatiques, ainsi que du ou des anticoagulants utilisés.

En fonction de l'efficacité de la méthode utilisée pour la séparation sus mentionnée, quelques éléments plasmatiques pourront être présents à l'état de traces dans le cruor obtenu ci-dessus sans pour autant nuire au critère de digestibilité des compositions de l'invention.

La fermentation du cruor est avantageusement précédée par l'hémolyse des globules rouges sanguins qui se traduit par la rupture de la paroi de ces globules et par la libération de leur contenu, essentiellement représenté par l'hémoglobine, dans le milieu. L'hémolyse facilite ainsi, lors de l'étape de la fermentation proprement dite (et l'hydrolyse qui s'en suit), l'accès des ferments utilisés aux protéines issues des globules rouges hémolysés. Cette hémolyse est réalisée, par exemple, en additionnant de l'eau dans des proportions se situant entre environ 30 % à 50 % de la quantité de cruor à hémolyser. D'autres techniques classiques de l'hémolyse peuvent également être utilisées, par exemple au moyen d'une pompe à haute pression.

La fermentation peut être assurée par toute méthode chimique, biochimique ou biotechnologique. Mais il est particulièrement avantageux pour assurer ladite fermentation de faire un apport de glucides au cruor hémolysé. Il s'est en effet avéré que les glucides étaient capables (outre l'importance de leur apport du point de vue alimentaire) de contribuer de façon importante à la réalisation de ladite fermentation.

Le choix des glucides n'est pas limitatif. Toutefois, le lactose ou encore le lactosérum, composé de 70 % de lactose et le reste de matières minérales et d'eau, constituent les glucides préférés selon l'invention, en raison de la préférence manifestée par le jeune bétail, notamment par les veaux, pour les produits lactés. Les quantités de glucides à ajouter sont par exemple de l'ordre de 80 kg de lactosérum en poudre, ou de 52 kg (minimum 50 kg) de lactose pour 2 000 litres de cruor dont le taux de matière sèche est environ de 30 %.

D'une manière générale, les souches utilisées pour la fermentation proprement dite sont avantageusement choisies parmi les bactéries capables de se développer sur des milieux sanguins (sang entier ou cruor), qui sont mésophiles, c'est-à-dire viables à des températures comprises entre 15°C et 40°C, et enfin du type acidifiant.

Les ferments lactiques correspondant aux critères sus-mentionnés, constituent les ferments préférés selon l'invention car, d'une part, ils procurent le goût lacté recherché, et d'autre part, ils produisant de l'acide lactique indispensable pour une bonne digestibilité de l'aliment.

Parmi de telles bactéries, on peut citer notamment les Streptococcus lactis, Streptoccocus crémoris et les Lactobacillus.

Ainsi, le milieu de fermentation, contenant des globules rouges hémolysés, des glucides et des ferments mésophiles acidifiants, est avantageusement maintenu à une température constante, choisie en fonction du type de ferment utilisé et qui est généralement comprise entre 15 et 40°C. Le temps d'incubation sera suffisant pour permettre d'abaisser le pH du milieu qui est environ de 7,00 à une valeur inférieure à pH 5,00, notamment comprise entre 4,5 et 4,7.

Dans le cas des ferments lactiques, cette baisse De pH est le résultat de la production par les bactéries d'acides qui inhibent progressivement la fermentation. La réaction s'arrête normalement d'elle-même lorsque le pH atteint est environ de 4,5. Une telle fermentation est du type aérobie.

Ainsi, l'invention concerne un principe nutritif de base pour l'alimentation animale, notamment du jeune bétail non sevré, consistant essentiellement en une composition de protéines issues de globules rouges de sang d'origine animale, cette composition étant essentiellement dépourvue de protéines plasmatiques et de leurs éventuels produits de dégradation, ayant une teneur en matières minérales inférieure à 10 %, notamment de l'ordre de 5 %, étant solubilisable et ayant une teneur en acide, notamment en acide lactique, conférant aux solutions, susceptibles d'être obtenues, un pH inférieur à 5,00.

L'invention concerne plus particulièrement un principe nutritif de base, tel qu'il a été précédemment défini, caractérisé en ce qu'il est essentiellement dépourvu de fibrinogène soluble, de fibrine insoluble et de leurs éventuels produits de dégradation.

En particulier, l'invention concerne un principe nutritif de base, tel qu'il a été précédemment défini, et caractérisé en ce qu'il comprend également des glucides, de préférence du lactose, ou du lactosérum, et des ferments mésophiles acidifiants, notamment des ferments lactiques.

Ce principe nutritif selon l'invention se présente soit sous forme d'un liquide corresponsant au milieu fermenté lui-même, soit sous forme déshydratée partielle ou totale.

A titre d'exemple un tel principe nutritif à base de cruor fermenté et séché, possède la composition suivante sur matière sèche :
. protéines > 80 %
. chlorures < 3 %
. matières minérales < 5 %
. fer (ppm) 2000 (environ)
. matières grasses traces
. humidité < 10 %
. solubilité > 90 %

L'invention concerne également le procédé d'obtention de ce principe nutritif par fermentation du cruor comme il l'a été précédemment décrit.

Un tel principe nutritif sert de base à la fabrication de compositions alimentaires, qui sont décrites dans la suite du texte, dont les propriétés nutritives sont équivalentes, voire supérieures, à celles des aliments d'allaitement traditionnels à base de lait écrémé.

De telles compositions alimentaires selon l'invention peuvent elles-mêmes être désignées sous l'expression "aliments d'allaitement".

L'invention concerne une composition alimentaire caractérisée en ce qu'elle contient le principe nutritif de base, tel qu'il a été défini ci-dessus, et en ce qu'elle comprend également de la méthionine dans des proportions telles que la concentration finale en méthionine de cette composition alimentaire soit, vis-à-vis des autres acides aminés de cette composition alimentaire, proche de celle de la méthionine vis-à-vis des acides aminés autres que la méthionine dans le lait écrêmé.

L'invention concerne également une composition pour l'alimentation des jeunes animaux, notamment du jeune bétail non sevré, caractérisée par des propriétés nutritives équivalentes, voires supérieures, à celles des aliments d'allaitement traditionnel à base de lait écrémé. Elle est obtenue à partir du principe nutritif précédent, sous forme liquide ou sèche, auquel a été additionné des glucides, notamment du lactose ou du lactosérum (sous forme sèche ou liquide), et de la méthionine dans des proportions telles que les concentrations finales de l'ensemble des constituants de cette composition, dont notamment les protéines, glucodes, ferments lactiques et méthionine, soient sensiblement équivalentes à celles de ces mêmes composants dans le lait écrémé.

Une telle composition alimentaire animale selon l'invention peut donc remplacer tout ou partie du lait écrémé utilisé pour l'allaitement du jeune bétail non sevré, et plus particulièrement des veaux.

Elle se présente sous forme liquide ou sèche, comme il l'a été précédemment décrit, et à titre d'exemple une telle composition présente sur la matière sèche la composition moyenne suivante :
Eau 5,0 %
Protéines 35,0 %
Matières grasses 0,5 %
Sucres + amidons 48,0 %
Cellulose 0 %
Lignine 0 %
Matières Minérales totales 8,5 %

D'une manière avantageuse, cette composition peut être complétée avec des matières grasses, d'origine animale ou végétale, mais également avec de l'amidon et des complexes minéraux et vitaminés.

De telles compositions alimentaires animales à base de cruor, et enrichies comme il l'est décrit ci-dessus, sont caractérisées par des propriétés nutritives équivalentes, voire supérieures à celles des aliments d'allaitement traditionnels à base de lait écrémé et de matières grasses, vitamines, etc...

En effet, suivant une étude réalisée sur plus de 500 veaux nourris avec une composition selon l'invention comprenant 24 % de protéines, et 17 % de matières grasses, pendant une durée de 60 jours, en association avec un aliment traditionnel à base de lait écrémé de type démarrage (c'est-à-dire donné aux veaux dès leur plus jeune âge), les conclusions suivantes ont été dégagées par rapport à un même nombre de témoins :
- amélioration de l'état sanitaire et facilité de démarrage

- croissance soutenue avec un gain de poids moyen quotidien supérieur dans plus de 50% des cas
- disparition pratiquement totale des troubles hépatiques
- pas de pénalisation par coloration excessive de la viande qui pourrait être due au métabolisme particulier du fer apporté par l'aliment.

D'une manière générale, le classement moyen des viandes (selon les normes européennes de couleur, de conformation et de gras) issues des lots de veaux nourris avec une composition selon l'invention, est supérieure au classement moyen des viandes issues des lots de veaux nourris avec des aliments d'allaitement traditionnels à base de lait.

Ces compositions alimentaires "enrichies" sont fournis "prêtes à l'emploi" par le fabricant à l'utilisateur sous forme liquide ou sèche, celui-ci n'ayant plus qu'à se conformer au mode d'emploi.

Avantageusement, de telles compositions comprennent 10 à 30 % de protéines issues de globules rouges, 30 à 60 % de glucides, 15 à 40 % de matières grasses, et 0,1 à 2 % de méthionine et 0,1 à 5 % de vitamine et autres constituants, les proportions étant choisies de telle façon que le tout fasse 100 %.

A titre d'exemple une composition alimentaire selon l'invention a la formule suivante :

VITAMINES EN MG/KG
Choline 13,42
Vitamine E 0,17
Vitamine B1 2,72
Vitamine B2 20,33
Vitamine B6 2,05
Vitamine B12 0,016
Vitamine PP 17,58
Vitamine B3 31,84
Acide folique 0,62
Biotine 0,25

ACIDES AMINES EN % DE LA COMPOSITION
Lysine 2,98
Méthionine 0,89
Méthionine + Cystine 1,49
Acide aspartique 3,52
Acide glutamique 4,20
Alanine 2,59
Arginine 1,38
Cystine 0,45
Glycine 1,64
Histidine 2,37
Isoleucine 0,65
Leucine 4,86
Phenylaline 1,18
Phenylaline + Tyrosine 3,94
Proline 1,68
Serine 2,01
Thréonine 1,85
Tryptophane 0,44
Tyrosine 1,07
Valine 6,25

MACRO ELEMENTS EN %
Phosphore 0,49
Calcium 0,42

Magnesium 0,09
Sodium 1,00
Chlore 1,65
Potassium 1,81
Soufre 0,32

OLIGO ELEMENTS EN MG/KG
Cuivre 3,45
Fer 632,00
Zinc 12,44
Manganèse 2,52
Cobalt 0,02
Iode 0,2
Molybdène 0,06
Selenium 0,15
Nikel 0,18
Fluor 4,05

D'une manière générale, les compositions alimentaires de la présente invention sont utilisables pour l'alimentation de tous les jeunes animaux susceptibles de pouvoir être nourris avec des aliments d'allaitement traditionnels à base de lait écrêmé, dont notamment les animaux de bétail tels que les veaux, les porcelets, chevreaux, agneaux, mais aussi les animaux domestiques tels que les chiots et les chatons.

Ces compositions alimentaires sont également utilisables pour les animaux adultes en raison de leurs propriétés fortifiantes, et plus particulièrement en clinique vétérinaire après un choc opératoire par exemple.

**Revendications**

1. Principe nutritif de base pour l'alimentation animale, notamment du jeune bétail non sevré, caractérisé en ce qu'il comprend des protéines issues de globules rouges de sang d'origine animale, et en ce qu'il est essentiellement dépourvu de protéines plasmatiques et de leurs éventuels produits de dégradation, ayant une teneur en matières minérales inférieure à 10 %, notamment de l'ordre de 5 %, étant solubilisable et ayant une teneur en acide, notamment en acide lactique, conférant aux solutions, susceptibles d'être obtenues, un pH inférieur à 5,00.

2. Principe nutritif selon la revendication 1, caractérisé en ce qu'il est essentiellement dépourvu de fibrinogène soluble, de fibrine insoluble et de leurs éventuels produits de dégradation.

3. Principe nutritif selon la revendication 1 ou la revendication 2, caractérisé en ce qu'il comprend également des glucides, notamment du lactose ou du lactosérum.

4. Principe nutritif selon l'une quelconque des revendications 1 à 3, caractérisé en ce qu'il comprend également des ferments mésophiles acidifiants, de préférence des ferments lactiques.

5. Composition alimentaire contenant le principe nutritif selon les revendications 1 à 4, caractérisée en ce qu'elle comprend également de la méthionine dans des proportions telles que la concentration finale en méthionine de cette composition alimentaire par rapport aux acides aminés de ladite composition alimentaire soit proche de celle de la méthionine vis-à-vis des acides aminés autres que la méthionine dans le lait écrêmé.

6. Composition alimentaire animale, notamment pour le jeune bétail non sevré, caractérisée en ce qu'elle contient :
- le principe nutritif selon les revendications 1 à 4 ;
- de la méthionine dans des proportions telles que sa concentration finale dans la composition alimentaire soit, vis-à-vis des autres acides aminés de la composition alimentaire, sensiblement du même ordre que celle de la méthionine vis-à-vis des acides aminés autres que la méthionine du lait écrêmé,
- des glucides, notamment du lactose ou lactosérum et, le cas échéant,
- des ferments lactiques mésophiles acidifiants,
- et, le cas échéant, tous autres constituants utiles pour la constitution de ladite composition alimentaire.

7. Composition alimentaire selon la revendication 6, caractérisée en ce que les derniers constituants mentionnés sont à base de matières grasses ou de complexes minéraux et vitaminés ou les deux à la fois.

8. Composition alimentaire selon la revendication 6 ou la revendication 7, caractérisée en ce que les derniers constituants mentionnés sont à base de matières grasses animales ou végétales.

9. Composition alimentaire selon la revendication 8, caractérisée en ce qu'elle contient :
- de 10 à 30 % en poids de protéines issues de globules rouges du sang,
- de 30 à 60 % de glucides,
- de 15 à 40 % de matières grasses,
- de 0,1 à 2 % de méthionine,
- de 0,1 à 5 % de vitamines et autres constituants.
les proportions étant choisies de telle façon que le tout fasse 100 %.

10. Procédé d'obtention d'un principe nutritif de base pour l'alimentation du jeune bétail non sevré, notamment des veaux, caractérisé en ce qu'il comprend l'hémolyse des globules rouges du milieu sanguin d'origine animale utilisé, suivie de la fermentation dudit milieu, par adjonction de glucides et de ferments, et en maintenant la température constante, généralement comprise entre 15°C et 40°C ceci afin d'amener le pH final à une valeur inférieure à 5,00.

11. Procédé selon la revendication 10, caractérisé en ce qu'il est réalisé en présence d'un apport de glucides, notamment de lactose ou de lactosérum ou les deux à la fois.

12. Procédé selon la revendication 10 ou la revendication 11, caractérisé en ce que les ferments utilisés sont des ferments acidifiants mésophiles, de préférence lactiques.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | FR-A-2 542 013 (ABC BIO-INDUSTRIES) * Revendications 1-3,5,6,9; page 3, ligne 6 - page 4, ligne 24; page 5, lignes 11-15,29 - page 6, ligne 2; exemples 1,2; page 13, lignes 1-5 * | 1,3,4 | A 23 K 1/04<br>A 23 K 1/18 |
| A | | 10-12 | |
| | --- | | |
| Y | DE-A-2 637 362 (SOCIETE INDUSTRIELLE DE RECUPERATION DE DECHETS ANIMAUX) * Revendications 1,4,7 * | | |
| | --- | | |
| A | CHEMICAL ABSTRACTS, vol. 71, no. 19, 10 novembre 1969, page 245, résumé no. 90121h, Columbus, Ohio, US; J. JECSAI et al.: "Amino acid composition and biological value of various animal feeds", & ALLATTENYESZTES 1968, 17(4),379-84 * Résumé * | 1 | |
| | ---     -/- | | |

**DOMAINES TECHNIQUES RECHERCHES (Int. Cl.4)**

A 23 K

Le présent rapport de recherche a été établi pour toutes les revendications

| Lieu de la recherche | Date d'achèvement de la recherche | Examinateur |
|---|---|---|
| LA HAYE | 29-10-1987 | DEKEIREL M.J. |

Office européen
des brevets

**RAPPORT DE RECHERCHE EUROPEENNE**

Numéro de la demande

EP 87 40 1723

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | JOURNAL OF AGRICULTURAL AND FOOD CHEMISTRY, vol. 25, no. 1, 1977, pages 171-175, WASHINGTON, D.C., US; P.E. WAIBEL et al.: "Processing damage to lysine and other amino acids in the manufacture of blood meal" * Page 172, colonne de droite, tableau II, C; alinéa 2 * | 1,5 | |
| A | FR-A-2 574 630 (BOSCOOP AGRARIPARI KOZOS VALLALAT) * Revendications 1,2,8-10,18; exemple 1; page 24, lignes 3-18; page 35, lignes 3-22 * | 1,4,6-9 | |
| A | EP-A-0 139 844 (AKADEMIA ROLNICZA) * Page 2, lignes 20-29 * | 1 | |
| A | GB-A- 948 781 (THORSTEN OLSSON et al.) * Revendications 1-3,6 * | 1 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 29-10-1987 | DEKEIREL M.J. |